# EUROPEAN PATENT SPECIFICATION

(11) **EP 3 273 417 B1**
(45) Date of publication and mention of the grant of the patent: **15.05.2019**
(21) Application number: 17181942.8
(22) Date of filing: 18.07.2017
(51) Int. Cl.: G08B 13/196, G01B 11/00, G06F 3/01, G08B 3/10

(54) **INTERACTIVE SECURITY ALERT SYSTEM**
INTERAKTIVES SICHERHEITSALARMSYSTEM
SYSTÈME D'ALERTE DE SÉCURITÉ INTERACTIF

(30) Priority: 19.07.2016 TW 105122758; 19.07.2016 TW 105122759
(43) Date of publication of application: 24.01.2018
(73) Proprietor: HPB Optoelectronics (SZ) Co Ltd, Shenzhen (CN)
(72) Inventor: Hsu, Hsuan-Yueh, 428 Taichung City (TW); Hsiao, Chun-Nan, 428 Taichung City (TW)
(74) Representative: Gee, Steven William

(56) References cited:
- EP-A2- 1 653 251
- CN-A- 101 587 621
- US-A1- 2013 243 247

## Description

### CROSS-REFERENCE TO RELATED APPLICATION

This application claims the priorities of Taiwanese patent application No. 105122758, filed on July 19, 2016, and Taiwanese patent application No. 105122759, filed on July 19, 2016.

### BACKGROUND OF THE INVENTION

### 1. Field of the Invention

The present invention relates generally to an interactive security alert system, and more particularly to a security alert system that is adapted to be installed in an exhibition hall to exhibit an exhibition/performance activity or a display content to be seen by a viewer and that is adapted to generate an alert signal or sound in case the viewer trespasses on a boundary line of the display content.

### 2. The Prior Arts

An exhibition hall is a place where different kinds of display activities or display contents are exhibited in different modes so as to seen or viewed by visiting audience or viewers. The display contents may include artworks, new electronic gadgets or products, industrial and commercial items, dynamic drama performances and singing performances. Of late, more and more people visit or take part in exhibitions in order to promote or enhance their lives and/or knowledge. A conventional exhibition, like static artworks, industry or commerce displays, mostly includes written texts and image show with vocal explanation. Alternatively, live people are assigned directly to introduce the relevant content of the show to visitors, in order to achieve the purpose of interaction with the visitors.

In the event that when there are no visitors in the exhibition hall, the image display and vocal explanation processes are continuously repeated, thereby causing undesired extra expense and if live people are hired to conduct the introduction of the display items, the extra expense also increases. If the display items are of high value, security guards must be hired and assigned to remind the visitors not to trespass on the boundary line of the display contents. The security guards may fail to notice every corner of the exhibition hall and the visitors when the hall is overcrowded.

US patent application 2013/0243247 discloses a system for generating information about the surroundings of a motor vehicle, the motor vehicle having a light emitting unit for emitting an optical pattern and an image capturing unit for capturing images of the optical pattern. The motor vehicle's surroundings affect the optical pattern and variations in the optical pattern are used to determine information about the surroundings. CN 101 587 621 discloses a system for monitoring the security of an exhibition hall, images of the exhibition hall being compared with previously-stored sample images.

### SUMMARY OF THE INVENTION

A primary objective of the present invention is to provide an interactive security alert system, and more particularly a security alert system that is adapted to be installed in an exhibition hall to exhibit an exhibition/performance activity (or display content) to be seen by a viewer and that is adapted to generate an alert signal or sound in case the viewer trespasses on a boundary line of the display content. The security alert system of the present invention mainly utilizes an image capturing unit and a distance arithmetic unit to calculate a varied image of the viewer and/or variations of image of the viewer and an optical pattern emitted from a light emitting unit onto the viewer so as to determine a distance between the exhibition/performance activity and the viewer such that when the viewer is within the detection range, a multimedia player unit displays the corresponding show activities. In the event that the viewer has trespassed onto the boundary line of the display content, an alarm generating unit generates an alarm signal or sound to be effectively seen or heard by the viewer, thereby providing security to the display contents and hence economizing upon the labor waste and extra expenses.

An interactive security alert system of the present invention is adapted to be installed in an exhibition hall to exhibit an exhibition/performance activity (or display content) to be seen by a viewer, and includes: a light emitting unit, an image capturing unit, a distance arithmetic unit, a multimedia player unit and an alarm generating unit. The light emitting unit is adapted to be installed in the exhibition hall for emitting a light beam consisting of an optical pattern onto the viewer, wherein the optical pattern varies depending on a distance between the viewer and the display content. The image capturing unit is adapted to be installed in the exhibition hall corresponding to the light emitting unit, and includes an optical lens for capturing images of the optical pattern and the viewer and a photosensitive element coupled with the optical lens for sensing the images. The distance arithmetic unit is adapted to be installed in the exhibition hall and is coupled electrically with the image capturing unit for receiving the images from the image capturing unit to calculate the distance between the viewer and the exhibition/performance activity based on variation of the images. The multimedia player unit is adapted to be installed in the exhibition hall and is coupled electrically with the distance arithmetic unit such that when the distance between the viewer and the exhibition/performance activity is smaller than a first threshold, the multimedia player unit displays multimedia information corresponding to the exhibition/performance activity to be seen by the viewer. The alarm generating unit is adapted to be installed in the exhibition hall and is coupled electrically with the multimedia player unit such that when the distance between the viewer and the exhibition/performance activity is smaller than a second threshold, the alarm generating unit generates an alarm signal or sound to be seen or heard by the viewer. The light emitting unit is a flickering light source, in which the flickering frequency is the same as the frequency of the images captured by the image capturing unit, wherein the distance arithmetic unit further compares the image with and without the light emitting unit being lit for determining variation of the optical pattern.

In the abovementioned security alert system of the present invention, the light emitting unit is selected from a group consisting of a laser device, an LED unit and an illuminator.

In the abovementioned security alert system of the present invention, the optical pattern is selected from a group consisting of a grid, a straight line, an irregularly arranged pattern and a regularly arranged pattern.

In the abovementioned security alert system of the present invention, the light beam emitted from the light emitting unit is a visible light beam or an invisible light beam.

In the abovementioned security alert system of the present invention, the optical lens is selected from a group consisting of a fish-eye lens, a wide-angle lens and a standard lens.

In the abovementioned security alert system of the present invention, the photosensitive element is selected from a group consisting of a CCD (Charge-Coupled Device) and a CMOS (Complementary Metal-Oxide-Semiconductor).

In the abovementioned security alert system of the present invention, the calculated distance between the viewer and the exhibition/performance activity is based on the variation of the images that consists of either variation of image of the viewer or variation of the optical pattern on the viewer or a combination of the former two variations.

In the abovementioned security alert system of the present invention, the multimedia information displayed by the multimedia player unit consists of a two-dimensional image, a three-dimensional image, a surrounding image, a photo, a text, a picture, an animation, or sound, or a combination of two or more of these.

In the abovementioned security alert system of the present invention, the alarm signal to be seen or heard by the viewer consists of a trumpet sound, a light beam, an image, a vibration or electrical signals, or a combination of two or more of these.

It is to be noted that because the security alert system of the present invention utilizes an image capturing unit and a distance arithmetic unit to calculate a varied image of the viewer and/or variations of image of the viewer and an optical pattern emitted from a light emitting unit onto the viewer so as to determine a distance between the exhibition/performance activity and the viewer such that when the viewer is within the detection range, a multimedia display unit displays the corresponding show activities. In the event that the viewer has trespassed onto the boundary line of the exhibition/performance activity, an alarm generating unit displays an alarm signal to be effectively seen or heard by the viewer, thereby providing security to the display contents and hence economizing upon the labor waste and extra expenses. In addition, the calculated distance between the viewer and the exhibition/performance activity is based on the variation of the images that consists of either variation of image of the viewer or variation of the optical pattern on the viewer or a combination of the former two variations such that when the distance between the viewer and the exhibition/performance activity is smaller than a first threshold, the multimedia player unit displays multimedia information corresponding to the exhibition/performance activity to be seen by the viewer and when the distance between the viewer and the exhibition/performance activity is smaller than a second threshold, the multimedia player unit displays an alarm signal to be seen or heard by the viewer, thereby providing security to the display contents and hence economizing upon the labor waste and extra expenses. The multimedia information displayed by the multimedia player unit may consist of a two-dimensional image, a three-dimensional image, a surrounding image, a photo, a text, a picture, an animation, or sound, or a combination of two or more of these. In the event that the viewer has trespassed onto the boundary line of the display content, the alarm generating unit displays or generates an alarm signal to be effectively seen or heard by the viewer, thereby preventing the viewer from approaching toward the display contents and economizing upon the expense for the hiring of security guards.

### BRIEF DESCRIPTION OF THE DRAWINGS

The present invention will be apparent to those skilled in the art by reading the following detailed description of a preferred embodiment thereof, with reference to the attached drawings, in which:
Fig. 1 shows a block diagram representing the elements constituting an interactive security alert system according to the present invention;
Fig. 2 is a perspective view of the interactive security alert system according to the present invention;
Fig. 3 is a perspective view illustrating how a multimedia player unit functions in the interactive security alert system according to the present invention; and
Fig. 4 is a perspective view illustrating how an alarm generating unit functions in the interactive security alert system according to the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

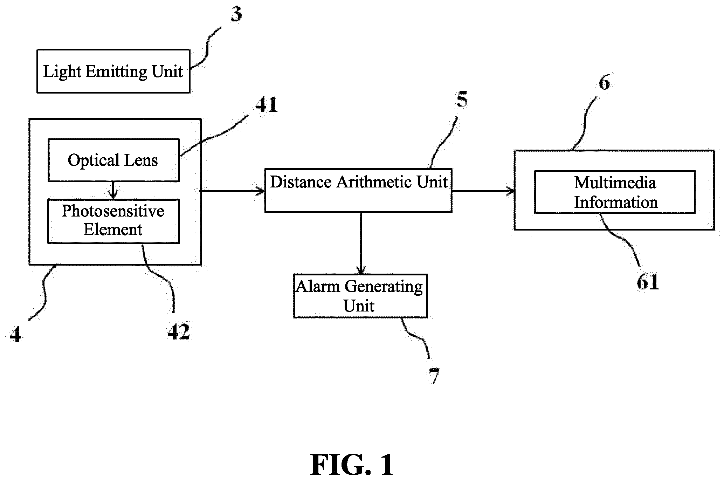

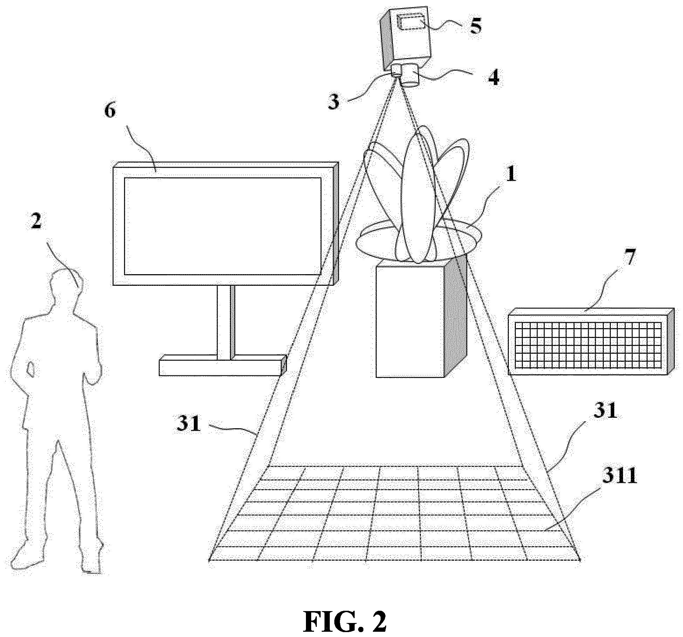

Referring to Figs. 1 and 2, wherein Fig. 1 shows a block diagram representing the elements constituting an interactive security alert system according to the present invention; and Fig. 2 is a perspective view of the interactive security alert system according to the present invention. As shown, the interactive security alert system according to the present invention is adapted to be installed in an exhibition hall to exhibit an exhibition/performance activity 1 to be seen by a viewer 2, and includes: a light emitting unit 3, an image capturing unit 4, a distance arithmetic unit 5, a multimedia player unit 6 and an alarm generating unit 7. Note that the exhibition/performance activity may be a static artwork, such as paintings of a well-known painter.

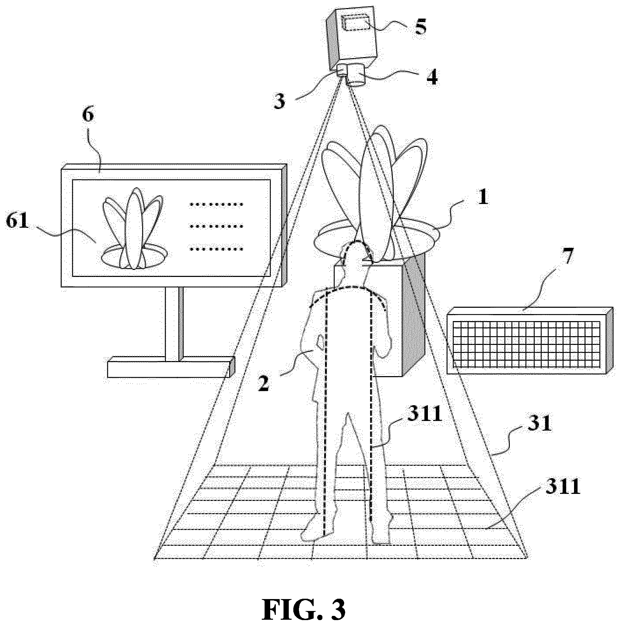

The light emitting unit 3 is adapted to be installed in the exhibition hall for emitting a light beam 31 consisting of an optical pattern 311 onto the viewer 2, wherein the optical pattern 311 varies depending on a distance between the viewer 2 and the exhibition/performance activity 1. Preferably, the light emitting unit 3 is selected from a group consisting of a laser device, an LED unit and an illuminator. The optical pattern 311 is selected from a group consisting of a grid, a straight line, an irregularly arranged pattern and a regularly arranged pattern. Referring to Fig. 3, the light beam 31 emitted from the light emitting unit 3 may be a visible light beam or an invisible light beam.

The image capturing unit 4 is adapted to be installed in the exhibition hall corresponding to the light emitting unit 3, includes an optical lens 41 for capturing images of the optical pattern 311 and the viewer 2 and a photosensitive element 42 coupled with the optical lens 41 for sensing the images. Preferably, the optical lens 41 is selected from a group consisting of a fish-eye lens, a wide-angle lens and a standard lens. In addition, the photosensitive element 42 is selected from a group consisting of a CCD (Charge-Coupled Device) and a CMOS (Complementary Metal-Oxide-Semiconductor).

The distance arithmetic unit 5 is adapted to be installed in the exhibition hall and is coupled electrically with the image capturing unit 4 for receiving the images from the image capturing unit 4, and calculates a distance between the viewer 2 and the exhibition/performance activity 1 based on variation of the images. Preferably, the calculated distance between the viewer 2 and the exhibition/performance activity 1 is based on the variation of the images that consists of either variation of image of the viewer 2 or variation of the optical pattern 311 on the viewer 2 or a combination of the former two variations.

The multimedia player unit 6 is adapted to be installed in the exhibition hall and is coupled electrically with the distance arithmetic unit 5 such that when the distance between the viewer 2 and the exhibition/performance activity 1 is smaller than a first threshold (value), the multimedia player unit 6 displays multimedia information corresponding to the exhibition/performance activity 1 to be seen by the viewer 2. Referring again to Fig. 3, the calculated distance between the viewer 2 and the exhibition/performance activity 1 is based on the variation of the images that consists of either variation of image of the viewer 2 or variation of the optical pattern 311 on the viewer 2 or a combination of the former two variations.

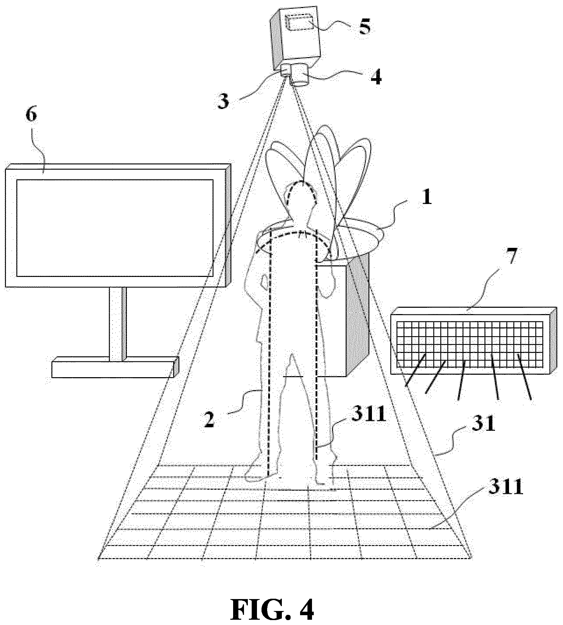

The alarm generating unit 7 is adapted to be installed in the exhibition hall and is coupled electrically with the multimedia player unit 6 such that when the distance between the viewer 2 and the exhibition/performance activity 1 is smaller than a second threshold (value), the alarm generating unit 7 generates an alarm signal to be seen or heard by the viewer 2. It is to be noted that the second threshold is smaller or shorter than the first threshold. Preferably, the alarm signal to be seen or heard by the viewer 2 may consist of a trumpet sound, a light beam, an image, a vibration or electrical signals, or a combination of two or more of these. Fig. 4 is a perspective view illustrating how an alarm generating unit 7 functions in the interactive security alert system according to the present invention. In the event that the viewer 2 has trespassed onto the boundary line of the exhibition/performance activity 1, the alarm generating unit 7 generates, upon sensing of the trespassing action, an alarm signal in the form of a buzzing sound via a speaker to be effectively seen or heard by the viewer 2, thereby reminding the viewer 2 not to approach too near to the exhibition/performance activity 1 or alternately informing the security guards, if any, to take care of this action, and hence providing security to the exhibition/performance activity 1 and/or economizing upon the labor waste and extra expenses. It is to be noted that the image capturing unit 4 consisting of an optical lens 41 is used herein to illustrate the better understanding of the security alert system of the present invention, the number and configuration of the light emitting unit 3, the image capturing unit 4 and the distance arithmetic unit 5, the multimedia player unit 6 and the alarm generating unit 7 should not be limited only to the disclosed ones.

Moreover, in the present invention, the light emitting unit 3 is a flickering light source, in which the flickering frequency is the same as the frequency of the images captured by the image capturing unit 4. Preferably, the distance arithmetic unit 5 may further compare the two images captured by the image capturing unit 4 before and after for determining variation of the optical pattern 311. In another embodiment of the present invention, the light emitting unit 3 is a flickering light source exhibiting turned-on and turned-off states alternately, the frequency of which is the same as the frequency at which the image capturing unit 4 captures the images. That is to say when the light emitting unit 3 emits a light beam 31 having the optical pattern 311 and is lit, the image capturing unit 4 captures the information between the viewer 2 and the optical pattern 311 and transmits this to the distance arithmetic unit 5, and when the light emitting unit 3 is turned off, the image capturing unit 4 captures the image again and transmits it to the distance arithmetic unit 5. The distance arithmetic unit 5 subtracts the images captured with and without the light emitting unit 3 being lit to perform the comparison action. Since the difference between the two images is only the presence or absence of the optical pattern 311, the two images can be subtracted so that the distance arithmetic unit 5 can more easily determine the variation of shapes in the optical pattern 311 to determine whether the viewer 2 in front of the exhibition/performance activity 1 causes the variation or changes of the pattern 311.

One distinct feature of the present invention resides in that in the event a sponsoring organization wishes to exhibit an exhibition/performance activity 1 (such as static artwork) within an exhibition hall, the interactive security alert system of the present invention can be implemented in order to save manpower and expense. Firstly of all, a light emitting unit 3 is installed at the exhibition/performance activity 1 of a static artwork, wherein the light emitting unit 3 emits a light beam 31 including at least one optical pattern 311, where the optical pattern 311 varies with the distance between the viewer 2 and the exhibition/performance activity 1. Secondly, an image capturing unit 4 is installed in the exhibition hall corresponding to the light emitting unit 3, wherein the image capturing unit 4 includes an optical lens 41, and a photosensitive element 42 coupled electrically to the optical lens 41, wherein the optical lens 41 captures the image of the viewer 2 and the optical pattern 311 on the photosensitive element 42. Thirdly, a distance arithmetic unit 5 is installed in the exhibition hall and is coupled electrically to the image capturing unit 4 such that the distance arithmetic unit 5 receives the image captured by the image capturing unit 4. The distance arithmetic unit 5 calculates the distance between the viewer 2 and the exhibition/performance activity 1. Fourthly, a plurality of multimedia player units 6 are installed in the exhibition hall and are coupled electrically with the distance arithmetic calculation unit 5 in such a manner that each of the multimedia player units 6 is arranged at each of the exhibition/performance activities 1, and when the distance between the viewer 2 and the exhibition/performance activity 1 calculated by the distance arithmetic unit 5 is less than a first threshold value, the multimedia player unit 6 displays the corresponding exhibition/performance activity 1 to the viewer 2 for enjoying the content. Finally, a plurality of alarm generating units 7 are installed in the exhibition hall in such a manner that each alarm generating unit 7 is coupled electrically with the distance arithmetic unit 5. Each alarm generating unit 7 is arranged corresponding to each of the exhibition/performance activities 1 in such a manner that the alarm generating unit 7 generates an alarm signal or sound when the distance between the viewer 2 and the exhibition/performance activity 1 calculated by the distance arithmetic unit 5 is less than a second threshold value. In the interactive security alert system of the present invention, the variation of the image of the viewer 2 is captured by the image capturing unit 4 and the distance arithmetic unit 5 calculates the optical pattern 311 transmitted by the light emitting unit 3 and the distance between the viewer 2 and the exhibition/performance activity 1 such that when the viewer 2 enters the detection range, where the multimedia player unit 6 plays out the corresponding exhibition/performance activity 1 (or within the optical pattern 311) to the viewer 2, and when the viewer 2 is further close to and touches the boundary line of the exhibition/performance activity 1, the alarm generating unit 7 generates an alarm signal or sound to warn or remind the viewer 2 not to trespass or cross the boundary line, thereby protecting the exhibition/performance activity 1. In other words, implementation of the security alert system of the present invention can save manpower and expense by virtue of interaction between the viewer 2 and the exhibition/performance activity 1.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A security alert system adapted to be installed in an exhibition hall to exhibit a display content (1), comprising:
a light emitting unit (3) adapted to be installed in the exhibition hall for emitting a light beam (31) consisting of an optical pattern (311) onto a viewer (2), wherein said optical pattern varies depending on a distance between the viewer (2) and the display content (1);
an image capturing unit (4) adapted to be installed in the exhibition hall corresponding to said light emitting unit (3), including an optical lens (41) for capturing images of said optical pattern (311) and the viewer (2) and a photosensitive element (42) coupled with said optical lens for sensing said images;
a distance arithmetic unit (5) adapted to be installed in the exhibition hall and coupled electrically with said image capturing unit (4) for receiving said images from said image capturing unit and calculating a distance between the viewer (2) and the display content (1) based on variation of said optical pattern (311) on said viewer (2) of the received images;
a multimedia player unit (6) adapted to be installed in the exhibition hall and coupled electrically with said distance arithmetic unit (5) such that when said distance between the viewer (2) and the display content (1) is smaller than a first threshold, said multimedia player unit displays multimedia information corresponding to said display content (1) to be seen or heard by said viewer; and
an alarm generating unit (7) adapted to be installed in the exhibition hall and coupled electrically with said multimedia player unit (6) such that when said distance between the viewer (2) and the display content (1) is smaller than a second threshold, said alarm generating unit generates an alarm signal to be seen or heard by said viewer (2), wherein said second threshold is smaller and/or shorter than said first threshold;
wherein said light emitting unit (3) is a flickering light source, in which the flickering frequency is the same as the frequency of said images captured by said image capturing unit (4), wherein said distance arithmetic unit (5) further compares the image with and without the light emitting unit being lit for determining variation of said optical pattern (311).

2. The security alert system according to claim 1, wherein said light emitting unit (3) is selected from a group consisting of a laser device, an LED unit and an illuminator.

3. The security alert system according to claim 1, wherein said optical pattern (311) is selected from a group consisting of a grid, a straight line, an irregularly arranged pattern and a regularly arranged pattern.

4. The security alert system according to claim 1, wherein said light beam (31) emitted from said light emitting unit is a visible light beam or an invisible light beam.

5. The security alert system according to claim 1, wherein said optical lens (41) is selected from a group consisting of a fish-eye lens, a wide-angle lens and a standard lens.

6. The security alert system according to claim 1, wherein said photosensitive element (42) is selected from a group consisting of a CCD (Charge-Coupled Device) and a CMOS (Complementary Metal-Oxide-Semiconductor).

7. The security alert system according to claim 1, wherein said calculated distance between the viewer (2) and the display content (1) is based on said variation of said images that consists of either variation of image of said viewer (2) or variation of said optical pattern (311) on said viewer or a combination of the former two variations.

8. The security alert system according to claim 1, wherein said multimedia information displayed by said multimedia player unit (6) consists of a two-dimensional image, a three-dimensional image, a surrounding image, a photo, a text, a picture, an animation or sound, or a combination of two or more of these.

9. The security alert system according to claim 1, wherein said alarm signal to be seen or heard by said viewer consists of a trumpet sound, a light beam, an image, a vibration or electrical signals, or a combination of two or more of these.

## Patentansprüche

1. Ein Sicherheitswarnsystem, das für den Einbau in eine Ausstellungshalle geeignet ist, um eine Anzeigeinhalt (1) anzuzeigen, umfassend:
eine lichtemittierende Einheit (3), geeignet für den Einbau in die
Ausstellungshalle, zur Emission eines Lichtstrahl (31), bestehend aus einem optischen Muster (311) auf einen Betrachter (2), wobei das optische Muster abhängig von einem Abstand zwischen dem Betrachter (2) und dem Anzeigeinhalt (1) variiert;
eine Bilderfassungseinheit (4), geeignet für den Einbau in die Ausstellungshalle entsprechend der lichtemittierenden Einheit (3), umfassend eine optische Linse (41) zum Erfassen von Bildern des optischen Musters (311) und des Betrachters (2) und eine lichtempfindliches Element (42), das mit der optischen Linse gekoppelt ist, zum Erfassen der Bilder;
eine Distanzrecheneinheit (5), geeignet für den Einbau in die Ausstellungshalle,
und koppelelektrisch mit der Bilderfassungseinheit (4) zum Empfangen der Bilder von der Bilderfassungseinheit und Berechnen eines Abstands zwischen dem Betrachter (2) und dem Anzeigeinhalt (1) basierend auf der Variation des optischen Musters (311) auf dem Betrachter (2) der empfangenen Bilder;
eine Multimedia-Playereinheit (6), geeignet für den Einbau in die
Ausstellungshalle, und elektrisch mit der Distanzrecheneinheit (5) gekoppelt, so dass, wenn der Abstand zwischen dem Betrachter (2) und dem Anzeigeinhalt (1) kleiner als ein erster Schwellenwert ist, die Multimedia-Playereinheit Multimedia-Informationen anzeigt, die dem Anzeigeinhalt (1) entsprechen, der von dem Betrachter gesehen oder gehört werden soll; und
eine Alarmerzeugungseinheit (7), geeignet für den Einbau in die
Ausstellungshalle und elektrisch mit der Multimedia-Playereinheit (6) gekoppelt, so dass, wenn der Abstand zwischen dem Betrachter (2) und dem Anzeigeinhalt (1) kleiner als ein zweiter Schwellenwert ist, die Alarmerzeugungseinheit ein Alarmsignal erzeugt, das von dem Betrachter (2) gesehen oder gehört werden kann, wobei der zweite Schwellenwert kleiner und/oder kürzer als der erste Schwellenwert ist;
wobei die lichtemittierende Einheit (3) eine flackernde Lichtquelle ist, bei der die
die Flackerfrequenz gleich der Frequenz der von der Bilderfassungseinheit (4) aufgenommenen Bilder ist, wobei die Distanzrecheneinheit (5) das Bild weiter mit und ohne Beleuchtung der lichtemittierende Einheit vergleicht, um die Variation des optischen Musters (311) zu bestimmen.

2. Sicherheitswarnsystem nach Anspruch 1, wobei die lichtemittierende Einheit (3) ausgewählt ist aus einer Gruppe bestehend aus einer Laservorrichtung, einer LED-Einheit und einer Beleuchtungseinrichtung.

3. Sicherheitswarnsystem nach Anspruch 1, wobei das optische Muster (311) ausgewählt ist aus einer Gruppe bestehend aus einem Gitter, einer Geraden, einem unregelmäßig angeordneten Muster und einem regelmäßig angeordneten Muster.

4. Sicherheitswarnsystem nach Anspruch 1, wobei der von der lichtemittierenden Einheit emittierte Lichtstrahl (31) ein sichtbarer Lichtstrahl oder ein unsichtbarer Lichtstrahl ist.

5. Sicherheitswarnsystem nach Anspruch 1, worin die optische Linse (41) ist ausgewählt aus einer Gruppe bestehend aus einem Fischaugenobjektiv, einem Weitwinkelobjektiv und einem Standardobjektiv.

6. Sicherheitswarnsystem nach Anspruch 1, wobei die lichtempfindlichen Element (42) ausgewählt ist aus einer Gruppe bestehend aus einem CCD (Charge-Coupled Device) und einem CMOS (Complementary Metal-Oxide-Semiconductor).

7. Sicherheitswarnsystem nach Anspruch 1, wobei die berechnete Entfernung zwischen dem Betrachter (2) und dem Anzeigeinhalt (1) basiert auf der Variation der Bilder, die entweder aus der Variation des Bildes des Betrachters (2) oder der Variation des optischen Musters (311) auf dem Betrachter oder einer Kombination der beiden ersten Variationen besteht.

8. Sicherheitswarnsystem nach Anspruch 1, wobei die Multimedia-Medien Informationen, die von der Multimedia-Playereinheit (6) angezeigt werden, aus einem zweidimensionalen Bild, einem dreidimensionalen Bild, einem umgebenden Bild, einem Foto, einem Text, einem Bild, einer Animation oder einem Ton oder einer Kombination von zwei oder mehr von diesen bestehen.

9. Sicherheitswarnsystem nach Anspruch 1, worin das vom Betrachter zu sehende oder zu hörende Alarmsignal aus einem Posaunengeräusch, einem Lichtstrahl, einem Bild, einer Vibration oder elektrischen Signalen oder einer Kombination von zwei oder mehreren davon besteht.

## Revendications

1. Un système d'alerte de sécurité adapté pour être installé dans une salle d'exposition afin d'exposer un contenu d'affichage (1), comprenant :
une unité d'émission de lumière (3) adaptée pour être installée dans la salle
d'exposition pour l'émission d'un faisceau lumineux (31) constitué d'un motif optique (31) sur un viseur (2), dans lequel ledit motif optique varie en fonction d'une distance entre le spectateur (2) et le contenu d'affichage (1) ;
une unité de capture d'images (4) adaptée pour être installée dans la salle
d'exposition correspondant à ladite unité émettrice de lumière (3),
comprenant une lentille optique (41) pour capturer des images dudit motif optique (311) et le spectateur (2) et un élément photosensible (42) couplé à
ladite lentille optique pour détecter lesdites images ;
une unité arithmétique de distance (5) adaptée pour être installée dans la salle
d'exposition et couplée électriquement avec ladite unité de capture d'image (4) pour recevoir lesdites images de ladite unité de capture d'image et calculer une distance entre le spectateur (2) et le contenu d'affichage (1) sur la base de la variation dudit motif optique (311) sur ledit spectateur (2) des images reçues ;
une unité de lecteur multimédia (6) adapté pour être installé dans la salle
d'exposition et couplé électriquement avec ladite unité arithmétique de distance (5) de telle sorte que lorsque ladite distance entre le spectateur (2) et le contenu d'affichage (1) est inférieure à un premier seuil, ladite unité de lecteur multimédia affiche des informations multimédia correspondant audit contenu d'affichage (1) pour être vu ou entendu par ledit spectateur ; et
une unité de génération d'alarme (7) adaptée pour être installée dans la salle
d'exposition et couplée électriquement avec ladite unité de lecture multimédia (6) de telle sorte que lorsque ladite distance entre le spectateur (2) et le contenu d'affichage (1) est inférieure à un deuxième seuil, ladite unité de génération d'alarme génère un signal d'alarme pour être vu ou entendu par ledit observateur (2), où ledit deuxième seuil est inférieur et/ou inférieur audit premier seuil ;
dans laquelle ladite unité d'émission de lumière (3) est une source de lumière
clignotante, dans laquelle la fréquence de clignotement est la même que la fréquence desdites images capturées par ladite unité de capture d'image (4), dans laquelle ladite unité arithmétique de distance (5) compare en outre l'image avec et sans que l'unité émettrice de lumière soit allumée pour déterminer la variation dudit motif optique (311).

2. Système d'alerte de sécurité selon la revendication 1, dans lequel ladite unité émettrice de lumière (3) est choisie dans un groupe comprenant un dispositif laser, une unité LED et un illuminateur.

3. Système d'alerte de sécurité selon la revendication 1, dans lequel ledit motif optique (311) est choisi dans un groupe constitué d'une grille, d'une ligne droite, d'un motif irrégulièrement disposé et d'un motif régulièrement disposé.

4. Système d'alerte de sécurité selon la revendication 1, dans lequel ledit faisceau lumineux (31) émis par ladite unité émettrice de lumière est un faisceau lumineux visible ou un faisceau lumineux invisible.

5. Système d'alerte de sécurité selon la revendication 1, dans lequel ladite lentille optique (41) est choisi dans le groupe constitué d'un objectif fish-eye, d'un objectif grand-angle et d'un objectif standard.

6. Système d'alerte de sécurité selon la revendication 1, dans lequel ledit système photosensible (42) est choisi dans un groupe constitué d'un CCD (dispositif à couplage de charge) et d'un CMOS (semi-conducteur complémentaire à l'oxyde de métal).

7. Système d'alerte de sécurité selon la revendication 1, dans lequel ladite distance calculée entre le spectateur (2) et le contenu d'affichage (1) est basé sur ladite variation desdites images qui consiste soit en une variation d'image dudit spectateur (2) soit en une variation dudit motif optique (311) sur ledit spectateur ou en une combinaison des deux premières variations.

8. Système d'alerte de sécurité selon la revendication 1, dans lequel ledit système multimédia l'information affichée par ladite unité de lecture multimédia (6) consiste en une image bidimensionnelle, une image tridimensionnelle, une image environnante, une photo, un texte, une image, une animation ou un son, ou une combinaison de deux ou plusieurs de ceux-ci.

9. Système d'alerte de sécurité selon la revendication 1, dans lequel ledit signal d'alarme qui doit être vu ou entendu par ledit spectateur consiste en un son de trompette, un faisceau lumineux, une image, une vibration ou des signaux électriques, ou une combinaison de deux ou plusieurs de ceux-ci.
